(19) Europäisches Patentamt
European Patent Office
Office européen des brevets

(11) **EP 3 862 077 A1**

(12) # EUROPÄISCHE PATENTANMELDUNG

(43) Veröffentlichungstag:
**11.08.2021 Patentblatt 2021/32**

(21) Anmeldenummer: **20155472.2**

(22) Anmeldetag: **04.02.2020**

(51) Int Cl.:
**B01J 19/00** (2006.01)     **G01N 31/10** (2006.01)
**B01L 3/00** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **HTE GmbH The High Throughput Experimentation Company**
**69123 Heidelberg (DE)**

(72) Erfinder:
- **DEJMEK, Michael**
  **69123 Heidelberg (DE)**
- **HANF, Schirin**
  **69123 Heidelberg (DE)**
- **LOESER, Patricia**
  **69123 Heidelberg (DE)**
- **SCHUNK, Stephan A.**
  **69123 Heidelberg (DE)**
- **ROEDER, Thorsen**
  **68163 Mannheim (DE)**
- **KLEMENT, Torsten**
  **68163 Mannheim (DE)**
- **WOLFF, Fabian**
  **70174 Stuttgart (DE)**

(74) Vertreter: **Kudla, Karsten**
**Patentanwälte**
**Isenbruck Bösl Hörschler PartG mbB**
**Eastsite One**
**Seckenheimer Landstrasse 4**
**68163 Mannheim (DE)**

(54) **VORRICHTUNG UND VERFAHREN ZUR UNTERSUCHUNG VON DREI-PHASEN-REAKTIONEN**

(57) Die Erfindung betrifft eine Vorrichtung zur Untersuchung von Reaktionen umfassend eine flüssige Phase und eine gasförmige Phase in Gegenwart eines festen Katalysators (13), umfassend einen Kanal (9), in dem der feste Katalysator (13) aufgenommen ist, einen Tropfenerzeuger (7) zur Zufuhr mindestens eines Einzeltropfens (31) in den Kanal (9) und eine Analyseeinheit (11) oder Messeinheit, dadurch gekennzeichnet, dass weiterhin ein Gasanschluss zur Zufuhr der Gasphase umfasst ist und der Kanal (9) am Beginn und am Ende des festen Katalysators (13) jeweils einen hydraulischen Durchmesser von 0,1 bis 5 mm aufweist und eine Pumpeneinheit umfasst ist, mit der der mindestens eine Einzeltropfen (31) oszillierend durch den festen Katalysator (13) bewegt werden kann. Die Erfindung betrifft weiterhin ein Verfahren zur Untersuchung einer Drei-Phasen-Reaktion in einer solchen Vorrichtung.

Fig. 1

EP 3 862 077 A1

**Beschreibung**

Die Erfindung geht aus von einer Vorrichtung zur Untersuchung von Reaktionen umfassend eine flüssige Phase und eine gasförmige Phase in Gegenwart eines festen Katalysators, umfassend einen Kanal, in dem der feste Katalysator aufgenommen ist, einen Tropfenerzeuger sowie eine Analyseeinheit oder Messeinheit. Die Erfindung betrifft weiterhin ein Verfahren zur Untersuchung einer Drei-Phasen-Reaktion in der Vorrichtung.

Eine Vorrichtung zur Untersuchung eines Tropfens in einem Kanal eines Mikroreaktors ist zum Beispiel beschrieben in Klement, T. et al., Reactor Concept for Contactless Kinetic Measurement in Oscillating Droplets via Raman Spectroscopy, Chemie Ingenieur Technik, 2019, 91, No. 5, Seiten 651-656. hier wird ein Tropfen mithilfe einer Kolbenpumpe oder einer Spritze oszillierend in dem Kanal bewegt. Die Tropfen bewegen sich dabei in einer inerten Flüssigkeit, durch die die einzelnen Tropfen separiert werden. Die zu untersuchenden Tropfen enthalten eine Mischung der zu reagierenden Edukte, deren Reaktion untersucht werden soll. Hierzu ist am Kanal eine Raman-Messeinheit angeordnet.

Da in der beschriebenen Messeinheit eine Flüssigkeit benötigt wird, mit der die Einzeltropfen, in denen flüssige Edukte enthalten sind, separiert werden, kann diese nicht zur Untersuchung von Drei-Phasen-Reaktionen in denen eine gasförmige Phase und eine flüssige Phase in Gegenwart eines festen Katalysators reagieren, eingesetzt werden.

Übliche Laboreinrichtungen, die zur Untersuchung derartiger Drei-Phasen-Reaktionen eingesetzt werden, umfassen Reaktionsgefäße mit vergleichsweise großem Volumen. Hierbei ist es jedoch in der Regel technisch aufwändig, Daten zur Reaktionskinetik zu erfassen. Des Weiteren gestalten sich Versuche im Batchautoklaven in der Regel sehr zeitaufwändig und die erhaltene Datenlage ist oft von begrenztem Wert, da in einem vollständig rückvermischten System gemessen wird. Mikro- und Makrokinetik können oft nicht differenzierend betrachtet werden aufgrund von Stofftransportlimitierungen bezüglich des Überganges gas/flüssig und/oder flüssig/fest. Zudem kann mit den üblichen konventionellen Methoden zur Bestimmung mikro- und makrokinetischer Phänomene in der Regel nicht unter betriebsrelevanten oder betriebsnahen Bedingungen gemessen werden, was wiederrum die Aussagekraft der Methoden im Bezug auf den Anwendungsfall stark limitiert.

Alternativ zu üblichen Reaktionsgefäßen, ist auch bekannt, Mikroreaktoren zur Bestimmung von Elementarkinetiken einzusetzen. Insbesondere zur Untersuchung von langsamen Reaktionen werden hier jedoch sehr lange Reaktoren oder sehr kleine Volumenströme benötigt. Ein weiterer Nachteil, insbesondere von sehr langen Reaktoren, ist neben der Größe, dass zur Untersuchung der Reaktionskinetik an vielen Positionen des Reaktionskanals Messungen erfolgen müssten.

Aufgabe der vorliegenden Erfindung war es daher, eine Vorrichtung zur Untersuchung von Reaktionen umfassend eine flüssige Phase und eine gasförmige Phase in Gegenwart eines festen Katalysators ohne die Nachteile der aus dem Stand der Technik bekannten Vorrichtungen bereitzustellen.

Gelöst wird die Aufgabe mit einer Vorrichtung zur Untersuchung von Reaktionen umfassend eine flüssige Phase und eine gasförmige Phase in Gegenwart eines festen Katalysators, umfassend einen Kanal, in dem der feste Katalysator aufgenommen ist, einen Tropfenerzeuger zur Zufuhr mindestens eines Einzeltropfens in den Kanal und eine Analyseeinheit oder Messeinheit, wobei weiterhin ein Gasanschluss zur Zufuhr der Gasphase umfasst ist und der Kanal am Beginn und am Ende des festen Katalysators jeweils einen hydraulischen Durchmesser im Bereich von 0,1 bis 5 mm aufweist und eine Pumpeneinheit umfasst ist, mit der der mindestens eine Einzeltropfen oszillierend durch den festen Katalysator bewegt werden kann.

Der hydraulische Durchmesser $D_h$ berechnet sich dabei zu

$$D_h = \frac{4A}{U}$$

mit der Querschnittsfläche des Kanals A und dem Umfang des Kanals U jeweils an der Position, an der der hydraulische Durchmesser bestimmt wird. Im Rahmen der vorliegenden Erfindung bedeutet "Durchmesser" immer "hydraulischer Durchmesser".

Aufgrund der wechselnden Strömungsrichtung des Tropfens durch dessen oszillierende Bewegung im Kanal wird im Rahmen der vorliegenden Erfindung "vor" und "hinter" oder "nach" einem Bauteil immer so definiert, dass vor dem Bauteil näher zum Tropfenerzeuger angeordnet ist und hinter dem entsprechenden Bauteil mit größerem Abstand zum Tropfenerzeuger.

Der Tropfenerzeuger zur Zufuhr mindestens eines Einzeltropfens ermöglicht es, einen einzelnen separierten Einzeltropfen oder mehrere voneinander separierte Einzeltropfen in den Kanal zuzuführen. Dies erlaubt es, dass der Kanal eine Gasphase enthält und die aus dem Stand der Technik bekannte Flüssigkeit zur Separierung der Tropfen nicht erforderlich ist. Wenn mehrere voneinander separierte Einzeltropfen zugeführt werden, so sind diese jeweils durch die Gasphase im Kanal getrennt, damit die Einzeltropfen während des Transports durch den Kanal und insbesondere den Katalysator voneinander getrennt bleiben und sich nicht vermischen. Die Zugabe mehrerer voneinander separierter Einzeltropfen ermöglicht es in einem Versuchsdurchgang bereits mehrere Versuche parallel durchzuführen. Neben der Zugabe mehrerer Einzeltropfen mit jeweils gleicher Zusammensetzung und Größe ist es auch möglich, beispielsweise wenn mehrere Tropfenerzeuger eingesetzt werden, die jeweils einen Einzeltropfen zuführen, auch Einzeltropfen unterschiedlicher Zusammensetzung, insbesondere mit unterschiedlichen Konzentrationen der im Einzeltropfen enthaltenen Flüssigkeiten, oder mit unterschiedlicher Größe zuzuführen. Bevorzugt ist es jedoch, mit dem Tropfenerzeuger nur einen Einzeltropfen zuzuführen.

Um die flüssige Phase zuführen zu können, ist der Tropfenerzeuger mit einem Flüssigkeitsvorrat verbunden. Hierbei kann die Flüssigkeit in jedem beliebigen geeigneten Flüssigkeitsbehälter bevorratet sein. Aus dem Flüssigkeitsvorrat wird die flüssige Phase mit einer geeigneten Fördervorrichtung, zum Beispiel mit einer Pumpe, dem Tropfenerzeuger zugeführt. Abhängig vom Typ des Tropfenerzeugers wird diesem auch die gasförmige Phase aus einem Gasvorrat zugeführt, so dass der Tropfen von der gasförmigen Phase umgeben in den Kanal zugeführt wird. Wenn der Tropfenerzeuger nur den mindestens einen Einzeltropfen ohne gasförmige Phase in den Kanal fördert, ist der Kanal mit dem Gasvorrat verbunden und die gasförmige Phase wird direkt in den Kanal eingeleitet. Wenn es nicht möglich ist, die gasförmige Phase über den Tropfenerzeuger in den Kanal zuzuführen, ist dieser auch dann, wenn der Tropfen mitsamt gasförmiger Phase in den Kanal zugeführt wird, mit dem Gasvorrat verbunden, um den Kanal vor der Zufuhr des mindestens einen Einzeltropfens mit dem Gas fluten zu können.

Als Tropfenerzeuger können sowohl kontinuierliche Tropfenerzeuger als auch Einzeltropfeninjektoren verwendet werden. Wenn ein kontinuierlicher Tropfenerzeuger eingesetzt wird, und nur ein Einzeltropfen zugeführt werden soll, ist es notwendig, aus der erzeugten Tropfenreihe einen Einzeltropfen abzuzweigen und diesen dem Kanal zuzuführen. Bevorzugt ist es, zur Erzeugung des Einzeltropfens einen Schleifeninjektor einzusetzen, wie er zum Beispiel in der Hochleistungsflüssigkeitschromatografie (HPLC) eingesetzt wird. In einem solchen Schleifeninjektor wird über eine Flüssigkeitszufuhr die flüssige Phase zugeführt und über eine Gaszufuhr die gasförmige Phase. Im Schleifeninjektor werden dann kontinuierlich Tropfen erzeugt, die in die Gasphase eingebracht werden. Diese durchlaufen eine Schleife, in der ein Ventil aufgenommen ist, das zur Entnahme eines Einzeltropfens so geschaltet werden kann, dass dieses nach Durchlauf eines Tropfens geöffnet wird, ein Tropfen mit der umgebenden Gasphase entnommen wird und anschließend wieder geschlossen wird, so dass die in der Gasphase aufgenommenen Tropfen wieder die Schleife durchlaufen. Über das Ventil wird der Einzeltropfen dann in den Kanal zugeführt. Wenn mehrere Einzeltropfen in den Kanal zugeführt werden sollen, ist es möglich, jeweils einen Einzeltropfen zuzuführen oder alternativ mehrere der in dem Schleifeninjektor kontinuierlich erzeugten Tropfen. Bevorzugt ist es dabei jedoch, nur einen Einzeltropfen zuzuführen.

Mit Hilfe der Pumpeneinheit kann der mindestens eine Einzeltropfen dann oszillierend durch den Katalysator bzw. den Kanal bewegt werden. Eine geeignete Pumpeneinheit umfasst zum Beispiel eine erste und eine zweite Pumpe mit umkehrbarer Förderrichtung, wobei die erste Pumpe vor dem festen Katalysator und die zweite Pumpe hinter dem festen Katalysator angeordnet ist und die Pumpen so miteinander wirken, dass immer eine Pumpe im Saugbetrieb und die andere Pumpe im Druckbetrieb arbeitet. Geeignete Pumpen mit umkehrbarer Förderrichtung sind zum Beispiel Schlauchpumpen, Kolbenpumpen oder Spritzenpumpen, deren Kolben in einem Zylinder hin und her bewegt werden können. Die erste und die zweite Pumpe sind dabei vorzugsweise über ein T-Stück mit dem Kanal verbunden. Bei Bewegung des Kolbens in Richtung des Kanals wird ein Druck erzeugt, so dass der Tropfen von der Pumpe, deren Kolben sich in Richtung des Kanals bewegt, wegbewegt wird. Gleichzeitig bewegt sich der Kolben der anderen Pumpe in Richtung vom Kanal weg, so dass hierdurch ein Unterdruck im Kanal entsteht, der die Bewegung des Einzeltropfens unterstützt. Sobald der Einzeltropfen seinen gewünschten Umkehrpunkt im Kanal erreicht hat, wird die Förderrichtung der ersten Pumpe und der zweiten Pumpe umgekehrt, so dass der Einzeltropfen nun in entgegengesetzter Richtung bewegt wird, bis dieser einen zweiten Umkehrpunkt erreicht. Sobald der Einzeltropfen den zweiten Umkehrpunkt erreicht hat, wird die Verrichtung der Pumpen erneut umgekehrt. Auf diese Weise wird die oszillierende Bewegung des Einzeltropfens durch den festen Katalysator erreicht. Wenn mehr als ein Einzeltropfen im Kanal enthalten sind, erfolgt die Umkehr der Förderrichtung erst nachdem der letzte Tropfen, der den Katalysator passiert hat, den Umkehrpunkt erreicht hat.

Alternativ zum Einsatz der ersten Pumpe und der zweiten Pumpe ist es auch möglich, einen Bypass vorzusehen, der vor dem festen Katalysator aus dem Kanal abzweigt und hinter dem festen Katalysator wieder in den Kanal einmündet. In dem Bypass wird dann eine Pumpe mit umkehrbarer Förderrichtung eingesetzt. Um den Einzeltropfen in der ersten Richtung durch den Kanal zu bewegen wird mit der Pumpe mit umkehrbarer Förderrichtung im Bypass eine Strömung erzeugt, die der Bewegungsrichtung des Einzeltropfens durch den festen Katalysator entgegen gerichtet ist. Sobald der Einzeltropfen den gewünschten Umkehrpunkt erreicht, wird die Förderrichtung der Pumpe mit umkehrbarer Förderrichtung umgekehrt, so dass der Einzeltropfen nun in die entgegengesetzte Richtung bis zum Erreichen des zweiten Umkehrpunkts bewegt wird. Auch hier wird bei der Untersuchung mehrerer Einzeltropfen die Förderrichtung jeweils erst dann umgekehrt, wenn der letzte Einzeltropfen, der den Katalysator passiert hat, den Umkehrpunkt erreicht hat.

Als Pumpe mit umkehrbarer Förderrichtung kann jede dem Fachmann bekannte Pumpe eingesetzt werden, deren Förderrichtung umkehrbar ist. Als Pumpe mit umkehrbarer Förderrichtung ist es zum Beispiel möglich, einen in einem Zylinder geführten Kolben zu verwenden, der hin und her bewegt werden kann. Hierbei ist es besonders bevorzugt, wenn der Zylinder Teil des Bypasses ist. Bei Bewegung des Kolbens in eine erste Richtung wird auf der einen Seite des Kolbens ein Druck erzeugt und auf der anderen Seite ein Unterdruck, so dass eine Strömung durch den Bypass und den Kanal erzeugt wird, durch die der mindestens eine Einzeltropfen durch den festen Katalysator bewegt wird. Bei Umkehr der Bewegungsrichtung des Kolbens kehrt sich auch die Strömungsrichtung durch den Bypass und den Kanal um, so dass der mindestens eine Einzeltropfen nun in die entgegengesetzte Richtung bewegt wird, so dass auf diese Weise ebenfalls eine oszillierende Bewegung des mindestens einen Einzeltropfens erzeugt wird.

Als Pumpe mit umkehrbarer Förderrichtung können sowohl gasfördernde Pumpen als auch flüssigfördernde Pumpen eingesetzt werden. Wenn eine flüssigfördernde Pumpe eingesetzt wird, wird bei Einsatz einer Pumpe mit umkehrbarer Förderrichtung der Bypass soweit mit einer inkompressiblen Flüssigkeit befüllt, dass durch die Pumpe mit umkehrbarer Förderrichtung nur Flüssigkeit transportiert wird, bis die Förderrichtung wieder umgekehrt wird und kein Gas in die Pumpe mit umkehrbarer Förderrichtung eindringen kann. Wenn eine erste Pumpe und eine zweite Pumpe verwendet werden, die jeweils flüssigfördernd sind, wird die inkompressible Flüssigkeit in den Bereich zwischen dem T-Stück und der ersten Pumpe beziehungsweise der zweiten Pumpe aufgenommen. Hierbei ist darauf zu achten, dass die Flüssigkeitsmenge ausreichend groß ist, den notwendigen Hub der ersten Pumpe und der zweiten Pumpe zu ermöglichen ohne dass diese trocken laufen und andererseits verhindert wird, dass die inkompressible Flüssigkeit über das T-Stück soweit in den Kanal eindringt, dass diese in Kontakt mit der Analyseeinheit oder Messeinheit oder dem festen Katalysator kommt. Besonders bevorzugt werden die Verbindungsstücke zwischen dem T-Stück und der Pumpe so groß gewählt, dass keine Flüssigkeit in den Kanal eindringen kann.

Wenn eine flüssigfördernde Pumpe eingesetzt wird, kann als inkompressible Flüssigkeit jede Flüssigkeit eingesetzt werden, die gegenüber der eingesetzten Gasphase und vorzugsweise auch gegenüber der im Einzeltropfen enthaltenen flüssigen Phase inert ist. Abhängig von der eingesetzten Gasphase und der eingesetzten flüssigen Phase im Einzeltropfen eignet sich als inkompressible Flüssigkeit zum Beispiel Wasser. Weitere geeignete inkompressible Flüssigkeiten sind zum Beispiel organische Lösungsmittel, insbesondere aprotisch polare, protisch polare oder unpolare Lösungsmittel, zum Beispiel Wasser, Methanol oder Acetonitril, ionische Flüssigkeiten, Flüssiggase wie Dimethylether oder Kohlenstoffdioxid, Silikonöle, perfluorierte Flüssigkeiten oder Mischungen daraus.

Als inkompressible Flüssigkeiten im Rahmen der vorliegenden Erfindung werden dabei alle Flüssigkeiten bezeichnet, die ein Kompressionsmodul von mehr als 0,7 GPa aufweisen.

Bevorzugt ist es weiterhin, wenn Mittel zur Steuerung der oszillierenden Bewegung des Einzeltropfens umfasst sind, mit denen der Tropfen automatisiert oszillierend über den Katalysator bewegt werden kann. Diese umfassen zum Beispiel Microcontroller, speicherprogrammierbare Steuerungen, Computer mit Prozessor und Speicher sowie anwendungsspezifische integrierte Schaltkreise, mit denen die mindestens eine Pumpe mit umkehrbarer Förderrichtung angesteuert wird.

Um die Reaktion im mindestens einen Einzeltropfen untersuchen zu können, ist mindestens eine Analyseeinheit oder Messeinheit am Kanal angeordnet. Die Analyseeinheit oder Messeinheit kann dabei vor dem festen Katalysator oder hinter dem festen Katalysator angeordnet sein. Weiterhin ist es auch möglich, mindestens eine Messeinheit oder Analyseeinheit vor dem festen Katalysator und mindestens eine Messeinheit oder Analyseeinheit hinter dem festen Katalysator anzuordnen. Wenn mindestens eine Messeinheit oder Analyseeinheit vor dem festen Katalysator angeordnet ist und mindestens eine Messeinheit oder Analyseeinheit hinter dem festen Katalysator angeordnet ist, ist es möglich, vor dem festen Katalysator eine andere Messeinheit oder Analyseeinheit zu positionieren als hinter dem festen Katalysator. Weiterhin ist es auch möglich, vor dem festen Katalysator und hinter dem festen Katalysator die gleiche Art Messeinheit oder Analyseeinheit zu positionieren. Abhängig von den zu erfassenden Messgrößen ist es möglich, jeweils nur eine Messeinheit oder Analyseeinheit vorzusehen oder mehrere. Mehrere Messeinheiten oder Analyseeinheiten sind insbesondere dann erforderlich, wenn die zu erfassenden Daten mit nur einer Messeinheit oder Analyseeinheit nicht erfasst werden können. Mehrere Messeinheiten oder Analyseeinheiten sind auch dann vorteilhaft, wenn mehrere Einzeltropfen in der Vorrichtung gleichzeitig untersucht werden sollen. Hier ist es besonders vorteilhaft, wenn der Abstand der Messstellen der Messeinheiten und Analyseeinheiten dem Abstand der Einzeltropfen im Kanal entspricht. In diesem Fall können Daten der Einzeltropfen gleichzeitig erfasst werden. Die Erfassung der Daten erfolgt dabei in der Regel mit einer geeigneten Messsonde, die direkt am Kanal positioniert ist und mit der Analyseeinheit oder Messeinheit zur Auswertung der mit der Messsonde erfassten Daten verbunden ist. Wenn es möglich ist, eine Analyseeinheit oder Messeinheit mit mehreren Messsonden zu verbinden, ist es weiterhin auch möglich, eine Messsonde vor dem festen Katalysator und eine Messsonde hinter dem festen Katalysator zu positionieren und beide Messsonden mit der Analyseeinheit oder der Messeinheit zu verbinden.

Wenn mehrere Einzeltropfen gleichzeitig untersucht werden sollen, jedoch nur eine Messstelle vorgesehen ist, wird die Förderung der Tropfen vorzugsweise jeweils unterbrochen, sobald ein Einzeltropfen die Messstelle erreicht hat, um die Daten zu erfassen. Sobald die Messung abgeschlossen ist, wird die Förderung der Einzeltropfen fortgesetzt, bis der nächste Einzeltropfen die Messstelle erreicht hat. Dies wird fortgesetzt, bis die Daten aller Einzeltropfen erfasst sind. Sobald dies erfolgt ist, wird die Förderrichtung umgekehrt und die Einzeltropfen in umgekehrter Förderrichtung durch den Katalysator und gegebenenfalls eine weitere Messstelle transportiert.

Geeignete Analyseeinheiten oder Messeinheiten sind insbesondere solche, mit denen die Zusammensetzung des Einzeltropfens bestimmt werden kann. Hierzu eignen sich insbesondere Analyseeinheiten oder Messeinheiten für kontaktlose, nichtinvasive Analyseverfahren, zum Beispiel Ramanspektrometer, Infrarot-Spektrometer, Nah-Infrarot-Spektrometer, Kernspinresonanz-Spektrometer, UV/VIS-Spektrometer, Elektronenspinresonanz-Spektrometer, Terahertz-Spektrometer oder Massenspektrometer. Alternativ oder zusätzlich zu diesen Messeinheiten oder Analyseeinheiten können auch noch Drucksensoren oder Temperatursensoren vorgesehen sein.

Die Messeinheit oder Analyseeinheit oder, wenn mehrere Messeinheiten oder Analyseeinheiten vorgesehen sind, alle Messeinheiten oder Analyseeinheiten, sind dabei zwischen den Umkehrpunkten, an denen die Bewegungsrichtung des Einzeltropfens geändert wird, positioniert.

Im Kanal ist der feste Katalysator aufgenommen. Der feste Katalysator kann dabei zum Beispiel in Form einer Schüttung, einer Packung, einer Tablette, einem Formkörper, einem Netz, einer unporösen Katalysatorplatte oder als Monolith ausgebildet sein. Insbesondere bei Ausbildung als unporöse Katalysatorplatte ist es bevorzugt, wenn die unporöse Katalysatorplatte eine Wandung des Kanals bildet oder auf der Wand des Kanals aufgebracht ist. Unabhängig von der Form des festen Katalysators kann dieser einen Träger umfassen, auf dem katalytisch aktives Material aufgebracht ist. Wenn der feste Katalysator als Schüttung ausgebildet ist, ist es insbesondere bevorzugt, wenn der feste Katalysator eine Partikelschüttung ist. Hierbei können die Partikel aus dem katalytisch aktiven Material bestehen oder die Partikel umfassen ein Trägermaterial, auf das das katalytisch aktive Material aufgebracht ist. Neben den das katalytisch aktive Material enthaltenden Partikeln können weiterhin Partikel aus einem Inertmaterial umfasst sein. Durch die Partikel aus Inertmaterial kann die Mischung zwischen dem Gas und der Flüssigkeit im mindestens einen Einzeltropfen verbessert werden. Zudem kann das Inertmaterial zur Fixierung des katalytisch aktiven Materials dienen oder zur Verdünnung des Katalysators genutzt werden. Dies ist insbesondere dann vorteilhaft, wenn ohne den Einsatz des Inertmaterials die Reaktion zu schnell abläuft.

Um zu verhindern, dass bei einem als Katalysatorschüttung ausgebildeten festen Katalysator Katalysatorpartikel mit dem Tropfen aus der Katalysatorschüttung mitgerissen werden oder in der Gasströmung, die sich vor und hinter dem Tropfen einstellt, mitgerissen werden, ist es bevorzugt, wenn die Katalysatorschüttung an ihrer Position im Kanal fixiert ist. Hierzu kann zum Beispiel ein flüssigkeits- und gasdurchlässiges feinporiges Gewebe eingesetzt werden. Als Materialien eignen sich zum Beispiel Metalle, Glasfasern, Cellulosefasern oder auch Glasfritten. Besonders bevorzugt wird ein Edelstahlgewebe eingesetzt. Die Maschenweite des feinporigen Gewebes wird dabei so gewählt, dass die Katalysatorpartikel das Gewebe nicht passieren können. Geeignete Maschenweiten liegen zum Beispiel im Bereich von 50 bis 200 $\mu$m, mehr bevorzugt 50 bis 150 $\mu$m und insbesondere 70 bis 120 $\mu$m.

Die durchströmte Länge des Katalysators wird vorzugsweise abhängig von der Reaktionsgeschwindigkeit und der Geschwindigkeit, mit der der mindestens eine Einzeltropfen durch den Katalysator bewegt wird, so gewählt, dass die im Tropfen enthaltenen Edukte nur zum Teil reagieren, während der Einzeltropfen den Katalysator passiert. Je besser aufgelöst der Reaktionsverlauf erfasst werden soll, umso kleiner muss der Teil der im Tropfen enthaltenen Edukte, der während eines Durchlaufs durch den Katalysator reagiert, sein. Hierbei muss der Teil der im Tropfen enthaltenen Edukte, der reagiert jedoch auch so groß sein, dass eine Änderung der Zusammensetzung des Tropfens von der eingesetzten Messeinheit oder Analyseeinheit erfasst werden kann. Die durchströmte Länge des Katalysators ist dabei die Länge parallel zur Achse des Kanals in Bewegungsrichtung des Einzeltropfens vom einen Ende des Katalysators bis zu dessen anderen Ende. Vorzugsweise wird die durchströmte Länge des Katalysators so gewählt, dass das Verhältnis der durchströmten Länge des Katalysators zum hydraulischen Durchmesser des Katalysators an dem dem Tropfenerzeuger zugewandten Ende im Bereich von 0,01 bis 100, mehr bevorzugt im Bereich von 0,2 bis 50 und insbesondere im Bereich von 0,5 bis 10 liegt.

Die Geschwindigkeit, mit der der mindestens eine Einzeltropfen durch den Katalysator bewegt wird, liegt dabei vorzugsweise im Bereich von 0.1 bis 20 mm/s, mehr bevorzugt im Bereich von 0.5 bis 5 mm/s und insbesondere im Bereich von 1 bis 2 mm/s.

Als Material für den Kanal kann jedes beliebige Material eingesetzt werden, dass stabil ist gegen die eingesetzte gasförmige Phase und die flüssige Phase des mindestens einen Einzeltropfens. Geeignete Materialien sind zum Beispiel transparente nichtreaktive Kunststoffe, beispielsweise Polyethylen hoher Dichte (HDPE), Polypropylen (PP), Polyethylenterephthalat (PET), Polycarbonat (PC), Perfluorethylenpropylen (FEP) oder Polymethylenmethacrylat (PMMA), Edelstähle oder Glas, beispielsweise Quarzglas. Besonders bevorzugt ist der Kanal aus Perfluorethylenpropylen. Insbesondere im Bereich der Messeinheit oder Analyseeinheit ist dabei ein Material für den Kanal auszuwählen, das die Erfassung der Daten nicht behindert. Das bedeutet, dass bei Verfahren, die Licht oder eine andere Strahlung nutzen, ein für die entsprechenden Wellenlängen des Lichts oder der anderen Strahlung transparentes Material verwendet werden muss. Hierbei ist es möglich, den gesamten Kanal aus einem Material zu fertigen oder für die unterschiedlichen Bereiche unterschiedliche Materialien zu nutzen. Unabhängig davon, ob der gesamte Kanal aus einem Material oder aus unterschiedlichen Materialien gefertigt ist, ist es vorteilhaft, wenn einzelne Funktionsbereiche des Kanals getrennte Einheiten sind, beispielsweise ein Abschnitt für den Anschluss des Bypasses oder der ersten Pumpe beziehungsweise der zweiten Pumpe, ein Abschnitt, an dem die Messeinheit oder Analyseeinheit positioniert ist und ein Abschnitt, in dem der feste Katalysator aufgenommen ist. Die einzelnen Abschnitte können dabei mit jeder üblichen Verbindung, die dem Fachmann bekannt ist, verbunden werden. Geeignete Verbindungen sind zum Beispiel Flansche, Schraubverbindungen, Verklebungen, Schrumpfverbindungen oder Schweißverbindungen. Insbesondere bei lösbaren Verbindungen wie Flanschen oder Schrumpfverbindungen ist es notwendig, die Verbindung gasdicht zu gestalten. Hierzu können zum Beispiel geeignete Dichtungen, beispielsweise O-Ringe, Flachdichtungen oder Dichtschnüre, verwendet werden. Wenn die Verbindung eine Schraubverbindung ist, ist eine Schraubverbindung mit Fitting oder Ferrule besonders bevorzugt.

Der Abschnitt, in dem der feste Katalysator aufgenommen ist, umfasst vorzugsweise eine Halterung, beispielsweise in Form eines Blocks, mit einem mittleren Bereich, mit einem Kanalabschnitt, in dem der feste Katalysator aufgenommen ist. An den mittleren Bereich, in dem der feste Katalysator aufgenommen ist, schließen sich beidseitig Bereiche an, in denen der Kanal mit der Halterung verbunden wird. Die Befestigung erfolgt vorzugsweise mittels Steckkupplungen oder durch Schraubverbindungen, wobei in den Bereichen der Halterung, die sich an den mittleren Bereich anschließen, Innengewinde ausgebildet sind, in die der Kanal, der das entsprechende Außengewinde aufweist, eingeschraubt werden kann. Besonders bevorzugt ist dabei, wenn der Kanal, der in die Halterung eingeschraubt wird, den gleichen Innendurchmesser aufweist wie der Kanalabschnitt im mittleren Bereich der Halterung, in dem der Katalysator aufgenommen ist. Die Halterung kann durch jedes geeignete, dem Fachmann bekannte Verfahren hergestellt werden. In einer besonderen Form wird die Halterung durch ein 3D-Druckverfahren hergestellt. Dies erlaubt es, den festen Katalysator bereits bei der Herstellung der Halterung einzubringen und zu fixieren und die Halterung einstückig auszuführen, so dass keine Undichtigkeit durch Verbindungsflächen zwischen zwei Halbzeugen, die zur Halterung verbunden werden, entstehen kann.

Der Kanal kann jede beliebige Querschnittsform aufweisen. Geeignete Querschnittsformen sind insbesondere kreisförmig, oval oder viereckig, insbesondere quadratisch oder rechteckig. Ganz besonders bevorzugt weist der Kanal eine kreisförmige Querschnittsform auf.

Der hydraulische Durchmesser des Kanals liegt erfindungsgemäß im Bereich von 0,1 bis 5 mm. Bevorzugt weist der Kanal einen hydraulischen Durchmesser im Bereich von 0,5 bis 2 mm auf. Hierbei können die unterschiedlichen Bereiche des Kanals, beispielsweise der Bereich, in dem der feste Katalysator aufgenommen ist und der Bereich, in dem die Messeinheit oder Analyseeinheit positioniert ist, unterschiedliche hydraulische Durchmesser aufweisen. Wenn der Bereich, in dem der feste Katalysator aufgenommen ist und der Bereich, in dem die Messeinheit oder Analyseeinheit positioniert ist, unterschiedliche hydraulische Durchmesser aufweisen, ist es insbesondere bevorzugt, wenn der hydraulische Durchmesser in dem Bereich, in dem der feste Katalysator aufgenommen ist, kleiner ist als der hydraulische Durchmesser in dem Bereich, in dem die Messeinheit oder Analyseeinheit positioniert ist.

Da bei der Reaktion, die in Gegenwart des festen Katalysators stattfindet, Wärme frei werden kann, die abgeführt werden muss oder, insbesondere bei einer endothermen Reaktion, Wärme zugeführt werden muss, ist es bevorzugt, wenn der feste Katalysator temperierbar ist. Dies kann beispielsweise durch Kontakt des Reaktors mit Peltier-Elementen passieren. Vorzugsweise erfolgt die Temperaturkontrolle über ein fluides Medium, insbesondere ein Gas oder eine Flüssigkeit. Hierzu ist es zum Beispiel möglich, den Kanalabschnitt zu temperieren, in dem der feste Katalysator aufgenommen ist. Um den Kanalabschnitt zu temperieren, kann jede beliebige, dem Fachmann bekannte Heiz- oder Kühlvorrichtung eingesetzt werden. So kann beispielsweise die Außenwand des Kanals als Doppelwand ausgeführt sein oder ein Temperierkanal um den Kanal geführt sein, wobei der von der Doppelwand umschlossene Hohlraum oder der Temperierkanal von einem Temperiermedium durchströmt werden. Alternativ ist es auch möglich, am Kanalabschnitt, in dem der feste Katalysator aufgenommen ist, beispielsweise Kühlelemente wie Peltierelemente anzubringen. Wenn der feste Katalysator geheizt werden soll, ist es auch möglich, einen Heizmantel oder eine induktive Heizung für den festen Katalysator vorzusehen.

Zusätzlich zu dem Abschnitt des Kanals, in dem der feste Katalysator aufgenommen ist, ist es auch möglich, die übrigen Kanalabschnitte zu temperieren. Hierbei ist es einerseits möglich, den gesamten Kanal einheitlich zu temperieren oder alternativ unterschiedliche Bereiche vorzusehen, die unterschiedlich temperiert werden können. So kann es zum Beispiel nötig sein, den Bereich des Kanals, in dem die Messeinheit oder Analyseeinheit positioniert ist zu kühlen, um für eine genaue Messung die Reaktion im Einzeltropfen zu unterbrechen. Die Heizung oder Kühlung der einzelnen Kanalabschnitte kann dabei so erfolgen wie vorstehend für den Bereich des Kanals, in dem der feste Katalysator positioniert ist, beschrieben. Bei Nutzung eines Temperiermediums zur Temperierung des Kanals müssen dabei die unterschiedlich zu temperierende Bereiche des Kanals so für das Temperiermedium voneinander entkoppelt sein, dass die unterschiedlich zu temperierende Bereiche von unterschiedlichen Temperiermedien oder von einem Temperiermedium mit unterschiedlichen Temperaturen durchströmt werden können. Bei Verwendung von Heiz- oder Kühlelementen können diese entsprechend am Kanal positioniert werden. Wenn ein Abschnitt eines Kanals sowohl geheizt als auch gekühlt werden können muss, können beispielsweise sowohl Heizelemente als auch Kühlelemente an diesem Abschnitt angebracht sein und je nach Bedarf werden entweder die Heizelemente oder sie Kühlelemente genutzt.

Wenn der Kanal unterschiedliche Bereiche mit unterschiedlichen hydraulischen Durchmessern aufweist, ist der Übergang so zu gestalten, dass der Einzeltropfen beim Durchströmen des Bereichs, in dem sich der hydraulische Durchmesser ändert, nicht in mehrere kleinere Tropfen zerfällt.

Ein Verfahren zur Untersuchung einer Drei-Phasen-Reaktion in der Vorrichtung umfasst:

(a) Zufuhr einer flüssigen Phase zu dem Tropfenerzeuger;

(b) Fluten des Kanals mit einer gasförmigen Phase;

(c) Erzeugen mindestens eines Einzeltropfens im Tropfenerzeuger und Zufuhr des mindestens einen Einzeltropfens in den mit der gasförmigen Phase gefluteten Kanal;

(d) Bewegen des mindestens einen Einzeltropfens durch den festen Katalysator in einer ersten Richtung unter Verwendung der Pumpeneinheit;

(e) Umkehr der Förderrichtung der Pumpeneinheit und Bewegen des mindestens einen Einzeltropfens durch den festen Katalysator in einer zweiten Richtung, die der ersten Richtung entgegengerichtet ist;

(f) Wiederholen der Schritte (d) und (e),

wobei der mindestens eine Einzeltropfen bei der Bewegung in die erste Richtung und/oder bei der Bewegung in die zweite Richtung bis zu einer Messstelle gefördert wird, an der die Messeinheit oder Analyseeinheit beziehungsweise der Messsensor der Messeinheit oder Analyseeinheit positioniert ist, um Daten zu erfassen.

Um den mindestens einen Einzeltropfen zu erzeugen, wird im ersten Schritt (a) dem Tropfenerzeuger die flüssige Phase zugeführt. Die flüssige Phase kann dabei aus jedem beliebigen Flüssigvorrat, beispielsweise aus einem geeigneten Flüssigkeitsbehälter, entnommen werden. Um die flüssige Phase dem Tropfenerzeuger zuzuführen, kann jede beliebige, für die Flüssigförderung geeignete Pumpe eingesetzt werden. Da für das Verfahren lediglich ein Einzeltropfen benötigt wird, ist es dabei besonders bevorzugt, Pumpen einzusetzen, die auch sehr kleine Fördervolumen fördern können. Hierzu können alle dem Fachmann bekannten Pumpen eingesetzt werden, mit denen sehr kleine Fördervolumen gefördert werden können. Geeignete Pumpen zum Transport der flüssigen Phase zum Tropfenerzeuger sind zum Beispiel Schlauchpumpen, Membranpumpen, Kolbenpumpen oder Spritzenpumpen. Im Tropfenerzeuger wird dann der Einzeltropfen erzeugt und in Schritt (c) in den Kanal zugeführt.

Zur Durchführung der Drei-Phasen-Reaktion muss neben der flüssigen Phase auch eine gasförmige Phase enthalten sein. Hierzu wird der Kanal mit der gasförmigen Phase geflutet, bevor der Einzeltropfen in den Kanal zugeführt wird. Um den Kanal mit der gasförmigen Phase zu fluten ist es möglich, einen Gasanschluss am Kanal vorzusehen, über den die gasförmige Phase in den Kanal eingeleitet wird. Alternativ ist es auch möglich, die gasförmige Phase über einen entsprechenden Anschluss am Tropfenerzeuger zuzuführen, bevor dem Tropfenerzeuger die flüssige Phase zugeführt wird. Die Zufuhr der gasförmigen Phase über den Tropfenerzeuger ist insbesondere dann möglich, wenn der Tropfenerzeuger so ausgebildet ist, dass in diesem ein Einzeltropfen erzeugt wird, der von der gasförmigen Phase umgeben ist.

Der Druck im Kanal, bei dem das Verfahren durchgeführt wird, wird vorzugsweise so gewählt, dass der Dampfdruck der Flüssigkeit in dem mindestens einen Einzeltropfen möglichst klein ist, so dass möglichst keine Flüssigkeit aus dem mindestens einen Einzeltropfen verdampft und in die Gasphase im Kanal übergeht. Hierbei ist der Druck insbesondere abhängig von der Zusammensetzung der flüssigen Phase im Einzeltropfen. Der Druck im Kanal, bei dem das Verfahren durchgeführt wird, wird dabei vorzugsweise erzeugt, bevor der mindestens eine Einzeltropfen in den Kanal eingeführt wird. Vorzugsweise wird das Verfahren bei einem Druck im Bereich von 0,2 bis 250 bar, mehr bevorzugt bei einem Druck im Bereich von 0,5 bis 200 bar und insbesondere bei einer Druck im Bereich von 1 bis 70 bar im Kanal durchgeführt.

Um eine Drei-Phasen-Reaktion durchführen zu können, kann die flüssige Phase, aus der der Einzeltropfen gebildet wird, mindestens ein flüssiges Edukt und die gasförmige Phase mindestens ein gasförmiges Edukt enthalten. Weiterhin ist es auch möglich, dass die flüssige Phase mindestens zwei flüssige Edukte oder ein Edukt, das durch chemische Reaktion ohne ein weiteres flüssiges oder gasförmiges Edukt umgesetzt wird, enthält und die gasförmige Phase inert ist. Die Zusammensetzung der flüssigen Phase und der gasförmigen Phase ist dabei abhängig von der zu untersuchenden Drei-Phasen-Reaktion. Neben dem mindestens einen flüssigen Edukt kann die flüssige Phase auch flüssiges Inertmedium enthalten. Weiterhin kann die gasförmige Phase neben dem mindestens einen gasförmigen Edukt auch gasförmiges Inertmedium enthalten oder, wenn die gasförmige Phase inert ist, aus dem gasförmigen Inertmedium bestehen. Durch den Einsatz von gasförmigem oder flüssigem Inertmedium kann die Konzentration der einzelnen Edukte eingestellt werden. Auch kann es notwendig sein, flüssiges oder gasförmiges Inertmedium zuzugeben, wenn die zu untersuchende Reaktion in Gegenwart eines flüssigen oder gasförmigen Inertmediums durchgeführt wird. Flüssige Inertmedien können, abhängig von der durchzuführenden Reaktion, zum Beispiel Wasser, Kohlenwasserstoffe wie Cyclohexan oder n-Hexan oder perfluorierte Öle sein. Als gasförmige Inertmedien eignen sich, ebenfalls abhängig von der durchzuführenden Reaktion, zum Beispiel Stickstoff, Edelgase, insbesondere Argon, Kohlenstoffdioxid oder Methan.

Der mindestens eine Einzeltropfen, der im Tropfenerzeuger erzeugt wird, weist vorzugsweise ein Volumen im Bereich von 4 bis 50 mm$^3$, mehr bevorzugt im Bereich von 6 bis 20 mm$^3$ und insbesondere im Bereich von 8 bis 16 mm$^3$ auf. Dieses Volumen ist ausreichend, um mithilfe der eingesetzten Messeinheit oder Analyseeinheit den Reaktionsverlauf zu untersuchen.

Um zu verhindern, dass der mindestens eine Einzeltropfen während der oszillierenden Bewegung zerfällt, das heißt, dass der mindestens eine Einzeltropfen stabil bleibt, ist es weiterhin bevorzugt, wenn der mindestens eine Einzeltropfen ein Verhältnis von Tropfendurchmesser senkrecht zur Achse des Kanals zu Tropfenlänge parallel zur Achse des Kanals im Bereich von 1 bis 20 aufweist. Besonders bevorzugt ist es, wenn der mindestens eine Einzeltropfen ein Verhältnis von Tropfenlänge parallel zur Achse des Kanals zu Tropfendurchmesser senkrecht zur Achse des Kanals im Bereich von 2 bis 15 und insbesondere im Bereich von 5 bis 10 aufweist.

Abhängig von der eingesetzten Messeinheit oder Analyseneinheit wird mit dem Verfahren zur Untersuchung der Drei-Phasen-Reaktion insbesondere die Konzentration der einzelnen Komponenten im Einzeltropfen und damit die Zusammensetzung der flüssigen Phase erfasst. Neben der Zusammensetzung des Einzeltropfens können alternativ oder zusätzlich auch Druck und Temperatur erfasst werden. Abhängig von den Durchläufen des Einzeltropfens durch den festen Katalysator und damit auch abhängig von der Reaktionsdauer nimmt der Anteil an Edukt im Einzeltropfen ab und der Anteil an Produkt zu. Sobald die zu erfassenden Daten an der Messstelle von der Messeinheit oder der Analyseneinheit erfasst worden sind, wird die Bewegungsrichtung des Tropfens umgekehrt, so dass dieser erneut den festen Katalysator durchläuft. Wenn nur eine Messstelle vorgesehen ist, wird nach dem erneuten Passieren des festen Katalysators wieder die Bewegungsrichtung umgekehrt, so dass der Tropfen erneut den festen Katalysator durchläuft und anschließend wieder die Messstelle passiert, um erneut die Daten zu erfassen und zu untersuchen, wie sich die zu erfassenden Daten geändert haben. Hierdurch wird der Reaktionsverlauf auf einfache Weise erfasst. Die Genauigkeit der Erfassung des Reaktionsfortschritts ist dabei von der Kontaktzeit des Einzeltropfens mit dem festen Katalysator bei jedem Durchgang durch den festen Katalysator abhängig. Je kürzer die Strecke ist, die der Einzeltropfen durch den festen Katalysator zurücklegt und je schneller der Tropfen den festen Katalysator passiert, umso kürzer sind die Abstände zwischen zwei Messungen und umso präziser wird der Reaktionsverlauf erfasst. Wenn mehrere Einzeltropfen untersucht werden sollen, wird bei nur einer Messstelle zunächst an der einen Messstelle jeder Einzeltropfen vermessen, bevor die Bewegungsrichtung umgekehrt wird. Wenn die Messung länger dauert als das Passieren der Messstelle durch den Einzeltropfen wird die Bewegung bis zum Abschluss der Messung unterbrochen und fortgesetzt, sobald die Messung abgeschlossen ist. Dies wird wiederholt, bis alle Einzeltropfen die Messstelle passiert haben. Erst dann wird die Bewegungsrichtung umgekehrt. Insbesondere, wenn ein schnelles Passieren des Katalysators durch die Einzeltropfen erforderlich ist, zum Beispiel bei schnellen Reaktionen, ist darauf zu achten, dass sich beim Unterbrechen des Transports der Einzeltropfen kein Einzeltropfen im Katalysator befindet. Dies kann zum Beispiel dadurch erreicht werden, dass der Abstand der Messstelle vom Katalysator so groß ist, dass der erste Einzeltropfen die Messstelle erst erreicht, wenn alle Tropfen den Katalysator passiert haben. Alternativ ist es auch möglich, den Abstand zwischen den Einzeltropfen so groß zu wählen, dass die Strecke durch den Katalysator kürzer ist als der Abstand zwischen den Einzeltropfen und die Messstelle so positioniert ist, dass sich während einer Messung Einzeltropfen vor und hinter dem Katalysator befinden können, jedoch nicht im Katalysator.

Um zu verhindern, dass insbesondere bei flüssigfördernden Pumpen die eingesetzte inkompressible Flüssigkeit nicht in den festen Katalysator eindringt, ist die Gasmenge, die im Kanal enthalten ist, so groß, dass sichergestellt ist, dass außer dem Einzeltropfen keine Flüssigkeit in den festen Katalysator und vorzugsweise keine Flüssigkeit in den Kanal gelangt. Weiterhin ist es notwendig, dass ausreichend viel gasförmige Phase zur Durchführung der Reaktion im Kanal enthalten ist. Besonders bevorzugt ist es dabei, wenn das Verhältnis des Gasvolumens im Kanal zum Tropfenvolumen im Bereich von 10 bis 1 000 000 liegt, mehr bevorzugt im Bereich von 100 bis 100 000 und insbesondere im Bereich von 250 bis 1000.

Die erfindungsgemäße Vorrichtung und das erfindungsgemäße Verfahren zur Untersuchung einer Drei-Phasen-Reaktion kann zur Untersuchung jeder Reaktion eingesetzt werden, in der mindestens ein flüssiges Edukt mit mindestens einem gasförmigen Edukt in Gegenwart eines festen Katalysators reagiert. Besonders bevorzugt werden die erfindungsgemäße Vorrichtung und das erfindungsgemäße Verfahren dabei für Reaktionen eingesetzt, die ausschließlich in Gegenwart des Katalysators ablaufen. Untersucht werden können prinzipiell alle dem Fachmann bekannten Drei-Phasen-Reaktionen, eine umfängliche, aber nicht vollständige Auflistung ist unter anderem zu finden in "Handbook of Heterogeneous Catalysis" VCH Wiley. Beispiele für Reaktionen, die untersucht werden können, sind unter anderem Hydrierungen, Oxidationen, Ammonoxidationen, Alkylierungen, Carbonylierungen, Hydroformylierungen oder Carboxylierungen.

Entsprechend der zu untersuchenden Reaktion wird die gasförmige Phase ausgewählt. So enthält diese beispielsweise bei einer Hydrierung Wasserstoff, bei einer Oxidation Sauerstoff, bei einer Ammonoxidation in der Regel Ammoniak und Sauerstoff, bei einer Alkylierung einen gasförmigen Kohlenwasserstoff und bei einer Carbonylierung Kohlenstoffmonoxid oder Kohlenstoffdioxid.

Beispiele für Reaktionen, die mit der erfindungsgemäßen Vorrichtung und dem erfindungsgemäßen Verfahren durchgeführt werden können, sind zum Beispiel die Hydrierung von Nitrobenzol mit Wasserstoff zu Anilin, die Oxidation von Benzol mit Sauerstoff zu Maleinsäureanhydrid, die Umsetzung von Benzol mit Propen zu Cumol oder die Carbonylierung von Methanol mit Kohlendioxid zu Dimethylcarbonat.

Ausführungsformen der Erfindung sind in den Figuren dargestellt und werden in der nachfolgenden Beschreibung näher erläutert.

Es zeigen:

Figur 1            eine schematische Darstellung einer Vorrichtung zur Untersuchung einer Reaktion umfassend eine flüssige Phase und eine gasförmige Phase in Gegenwart eines festen Katalysators in einer ersten Ausführungsform,

Figur2            eine schematische Darstellung einer Vorrichtung zur Untersuchung einer Reaktion umfassend eine flüssige Phase und eine gasförmige Phase in Gegenwart eines festen Katalysators in einer zweiten Ausführungsform,

Figur 3            eine Halterung zur Aufnahme des Katalysators,

Figuren 4a bis 4c   eine schematische Darstellung der Durchführung des Verfahrens zur Untersuchung einer Drei-Phasen-Reaktion.

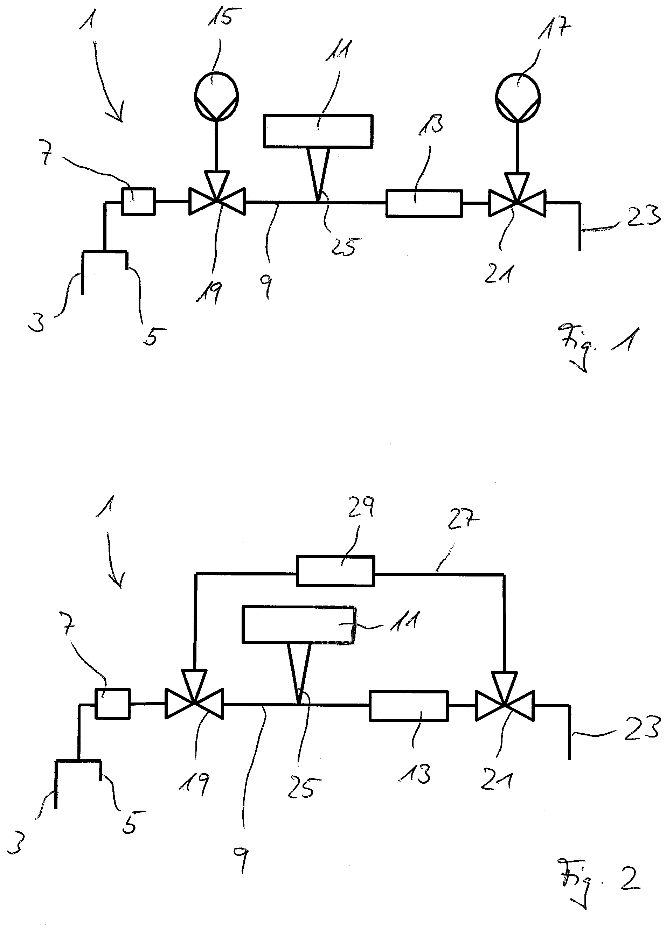

In Figur 1 ist eine Vorrichtung zur Untersuchung einer Reaktion umfassend eine flüssige Phase und eine gasförmige Phase in Gegenwart eines festen Katalysators in einer ersten Ausführungsform dargestellt.

Eine Vorrichtung 1 zur Untersuchung einer Reaktion umfasst einen Flüssigkeitsvorrat 3 und einen Gasvorrat 5. Im Flüssigkeitsvorrat 3 ist flüssiges Edukt der zu untersuchenden Reaktion bevorratet und im Gasvorrat 5 gasförmiges Edukt der zu untersuchenden Reaktion. Zusätzlich kann das flüssige Medium neben mindestens einem flüssigen Edukt der zu untersuchenden Reaktion auch flüssiges Inertmedium enthalten. Ebenso kann das gasförmige Medium neben dem mindestens einen gasförmigen Edukt auch gasförmiges Inertmedium enthalten. Die Zusammensetzung der flüssigen Phase und der gasförmigen Phase ist dabei jeweils abhängig von der zu untersuchenden Reaktion.

Die flüssige Phase und die gasförmige Phase werden einem Tropfenerzeuger 7 zugeführt. Im Tropfenerzeuger 7 wird ein Einzeltropfen erzeugt. Dieser wird aus dem Tropfenerzeuger 7 in einen Kanal 9 eingeleitet. Zur Untersuchung einer Drei-Phasen-Reaktion wird der Kanal 9 vor Zugabe des Einzeltropfens mit der gasförmigen Phase geflutet. Bei der in Figur 1 dargestellten Ausführungsform wird hierbei die gasförmige Phase ohne Zugabe der flüssigen Phase durch den Tropfenerzeuger 7 in den Kanal 9 eingeleitet. Am Kanal 9 ist eine Analyseeinheit 11 positioniert. Mit der Analyseeinheit 11 kann zum Beispiel die Zusammensetzung des Einzeltropfens während dieser die Analyseeinheit 11 passiert, erfasst werden. Weiterhin ist im Kanal 9 ein fester Katalysator 13 aufgenommen, in dessen Gegenwart die flüssige Phase des Einzeltropfens mit der gasförmigen Phase reagiert. Um den Einzeltropfen oszillierend durch den festen Katalysator 13 und an der Analyseeinheit 11 vorbei zu bewegen, sind mit dem Kanal 9 eine erste Pumpe 15 und eine zweite Pumpe 17 verbunden. Die erste Pumpe 15 ist dabei über ein erstes 3-Wege-Ventil 19 und die zweite Pumpe 17 über ein zweites 3-Wege-Ventil 21 an den Kanal 9 angeschlossen.

Das erste 3-Wege-Ventil 19 ist zunächst so geschaltet, dass die Verbindung vom Tropfenerzeuger 7 in den Kanal 9 geöffnet ist. Nach Zufuhr des Einzeltropfens in den Kanal 9 wird das erste 3-Wege-Ventil 19 so geschaltet, dass die Verbindung zum Tropfenerzeuger 7 geschlossen ist und die Verbindung von der ersten Pumpe 15 in den Kanal 9 geöffnet ist. Weiterhin ist das zweite 3-Wege-Ventil 21 so geschaltet, dass die Verbindung vom Kanal 9 zur zweiten Pumpe 17 geöffnet ist und die Verbindung zu einem Auslass 23 geschlossen ist.

Die erste Pumpe 15 und die zweite Pumpe 17 sind jeweils Pumpen mit umkehrbarer Förderrichtung. Um den Tropfen vom ersten 3-Wege-Ventil 19 an der Analyseeinheit 11 vorbei und durch den festen Katalysator 13 in Richtung des zweiten 3-Wege-Ventils 21 zu bewegen, funktioniert die erste Pumpe 15 als Druckpumpe, so dass das im Kanal 9 enthaltene Gas und damit der im Kanal enthaltene Einzeltropfen aufgrund des erzeugten Drucks in Richtung des zweiten 3-Wege-Ventils 21 bewegt wird. Gleichzeitig wirkt die zweite Pumpe 17 als Saugpumpe und unterstützt auf diese Weise die Bewegung. Sobald der Einzeltropfen den festen Katalysator 13 passiert hat, wird die Förderrichtung der Pumpen umgekehrt. Nun wirkt die zweite Pumpe 17 als Druckpumpe und die erste Pumpe 15 als Saugpumpe, so dass der Einzeltropfen durch den festen Katalysator 13 und an der Analyseeinheit 11 vorbei in Richtung des ersten 3-Wege-Ventils 19 bewegt wird. Sobald der Einzeltropfen die Analyseeinheit 11 passiert hat erfolgte erneut eine Umkehr der Förderrichtung der ersten Pumpe 15 und der zweiten Pumpe 17. Dies wird so oft wiederholt, bis entweder eine vorgegebene Anzahl an Richtungswechseln erreicht ist oder bis keine Änderung der Zusammensetzung des Tropfens mehr an der Analyseeinheit 11 erfasst wird. Sollte es notwendig sein, den Tropfen für eine längere Zeit an der Position zu halten, an der sich die Analyseeinheit 11 befindet, beispielsweise weil eine längere Messung notwendig ist, wird die Förderung durch die Pumpen gestoppt, sobald der Einzeltropfen die Positionen der Analyseeinheit 11 erreicht hat. Sobald die Messung abgeschlossen ist wird dann mit Umkehr der Förderrichtung das Verfahren fortgesetzt.

Figur 2 zeigt eine Vorrichtung zur Untersuchung einer Reaktion umfassend eine flüssige Phase in eine gasförmige Phase in Gegenwart eines festen Katalysators in einer zweiten Ausführungsform.

Die in Figur 2 gezeigt Ausführungsform unterscheidet sich von der in Figur 1 dargestellten dadurch, dass anstelle der ersten Pumpe 15 und der zweiten Pumpe 17 ein Bypass 27 vorgesehen ist, in dem eine Pumpe 29 mit umkehrbarer Förderrichtung aufgenommen ist. Die Pumpe 29 mit umkehrbarer Förderrichtung kann jede geeignete Pumpe sein, die es erlaubt, das die Pumpe 29 mit umkehrbarer Förderrichtung durchströmende Medium entweder vom ersten 3-Wege-Ventil 19 zum zweiten 3-Wege-Ventil 21 zu bewegen oder umgekehrt. Eine geeignete Pumpe mit umkehrbarer Förderrichtung 29 ist beispielsweise ein in einem Zylinder aufgenommene Kolben, der hin und her bewegt werden kann.

Sowohl neben der in Figur 1 dargestellten Ausführungsform als auch neben den Figur 2 dargestellten Ausführungsform mit jeweils nur einer Analyseeinheit 11 ist es auch möglich, eine zweite Analyseeinheit vorzusehen, die beispielsweise ebenfalls vor dem festen Katalysator 13 positioniert sein kann. Dies ist dann der Fall, wenn eine einzelne Analyseeinheit nicht ausreichend ist, die zur Untersuchung der Reaktion erforderlichen Daten zu erfassen.

Weiterhin ist es auch möglich, zusätzlich oder alternativ zu der mindestens einen Analyseeinheit 11 vor dem festen Katalysator 13 mindestens eine Analyseeinheit hinter dem festen Katalysator 13 zu positionieren.

Die Erfassung der zu messenden Daten erfolgt dabei üblicherweise mit einer Messsonde 25, die direkt am Kanal 9 positioniert ist oder in den Kanal 9 durch eine geeignete Zuführung geführt ist und die mit der Analyseeinheit 11 verbunden ist. Hierbei ist es auch möglich, wenn mit der einen Messsonde 25 verschiedene Daten erfasst werden können, die Messsonde 25 mit unterschiedlichen Analyseeinheiten 11 zur Auswertung und Erfassung unterschiedlicher Daten zu verbinden. Weiterhin ist es auch möglich, mehrere Messsonde 25 mit einer Analyseeinheit zu verbinden, wenn beispielsweise unterschiedliche Daten zur Auswertung benötigt werden. Wenn mehrere gleiche Messsonden mit einer Analyseneinheit 11 verbunden werden können, ist es weiterhin möglich, eine Messsonde vor dem festen Katalysator 13 und eine Messsonde hinter dem festen Katalysator 13 zu positionieren. Auf diese Weise können mit einer Analyseneinheit und den zwei Messsonden jeweils vor und hinter dem festen Katalysator 13 Daten aus dem Einzeltropfen aufgenommen werden.

Alternativ zu den in den Figuren 1 und 2 dargestellten 3-Wege-Ventilen 19, 21 ist es auch möglich ein 2-Wege-Ventil und ein T-Stück vorzusehen. Um das erste 3-Wege-Ventil 19 zu ersetzen wird hierzu hinter den Tropfenerzeuger 7 ein 2-Wege-Ventil in den Kanal 9 aufgenommen, mit dem die Verbindung zum Tropfenerzeuger geschlossen werden kann. Hinter dem 2-Wege-Ventil befindet sich dann das T-Stück, über das die erste Pumpe 15 beziehungsweise der Bypass 27 mit dem Kanal 9 verbunden ist. Das zweite 3-Wege-Ventil 21 wird durch ein T-Stück ersetzt, mit dem die zweite Pumpe 17 oder der Bypass 27 mit dem Kanal 9 verbunden ist und ein 2-Wege-Ventil, das hinter dem T-Stück angeordnet ist und mit dem der Auslass 23 verschlossen werden kann.

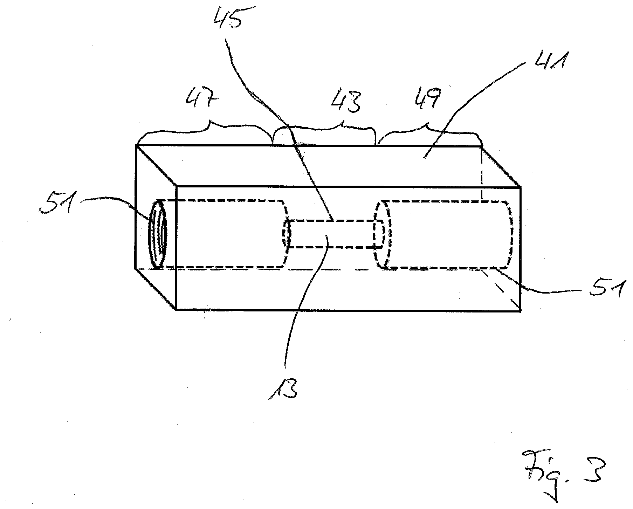

Figur 3 zeigt eine Halterung zur Aufnahme des Katalysators.

Eine Halterung 41 zur Aufnahme des Katalysators 13, kann beispielsweise in Form eines Blocks mit einem mittleren Bereich 43 mit einem Kanalabschnitt 45, in dem der feste Katalysator 13 aufgenommen ist, ausgeführt sein. An den mittleren Bereich 43, der den Kanalabschnitt 45 mit dem aufgenommenen festen Katalysator umfasst, schließen sich auf der einen Seite ein erster Bereich 47 und auf der anderen Seite ein zweiter Bereich 49 an, in denen der Kanal mit der Halterung verbunden wird. Die Verbindung der Halterung 41 mit dem Kanal 9 erfolgt zum Beispiel mittels Steckkupplungen oder durch Schraubverbindungen. Hierzu werden vorzugsweise in den ersten Bereich 47 und in den zweiten Bereich 49 jeweils Innengewinde 51 ausgebildet. In die Innengewinde 51 können zum Beispiel Einsteckkupplungen eingeschraubt werden, in die der Kanal 9 eingekoppelt wird. Alternativ ist es auch möglich, den Kanal direkt in die Innengewinde 51 einzuschrauben, wobei in diesem Fall der Kanal 9 mit einem Außengewinde versehen ist. Besonders bevorzugt ist es, wenn der Kanalabschnitt 45, in dem der feste Katalysator 13 aufgenommen ist, einen konstanten Querschnitt aufweist. Weiterhin ist es bevorzugt, wenn der Kanalabschnitt 45, in dem der feste Katalysator aufgenommen ist, den gleichen Querschnitt aufweist wie der Kanal 9. Bei einem gleichen Querschnitt über den gesamten Kanal inklusive des Kanalabschnitts 45, in dem der feste Katalysator 13 aufgenommen ist, treten keine Druckunterschiede aufgrund sich ändernder Querschnittsflächen und Querschnittsformen auf und die Stabilität des Einzeltropfens bei der Bewegung durch den Kanal 9 und den festen Katalysator 13 wird erhalten.

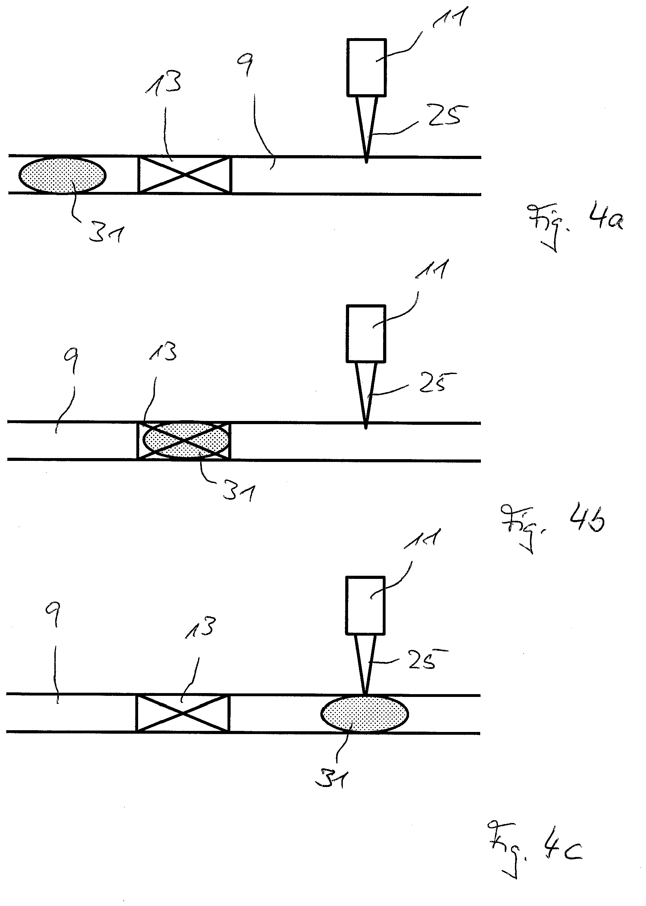

Eine schematische Darstellung zur Untersuchung einer 3-Phasen-Reaktion ist beispielhaft in den Figuren 4a bis 4c dargestellt.

In den Kanal 9 wird ein Einzeltropfen 31 eingebracht. Dieser befindet sich in Figur 4a in einer ersten Position vor dem festen Katalysator 13. Nun wird der Einzeltropfen 31 wie in Figur 4b gezeigt durch den festen Katalysator 13 bewegt. Im festen Katalysator 13 reagiert die flüssige Phase des Einzeltropfens 31 mit der den Einzeltropfen 31 umgebenden gasförmigen Phase. Wie in Figur 4c gezeigt wird der Tropfen dann weiter zur Messsonde 25 der Analyseeinheit 11 bewegt. Hier werden mithilfe der Messsonde 25 Messdaten am Einzeltropfen 31 erfasst, insbesondere die Zusammensetzung des Einzeltropfens 31. Die von der Messsonde 25 erfassten Daten werden in der Analyseeinheit 11 ausgewertet. Nach dem Erfassen der Daten wird die Bewegung des Einzeltropfens 31 umgekehrt und der Einzeltropfen 31 durchströmt wieder den festen Katalysator 13 bis dieser in der ersten Position, die in Figur 4a gezeigt ist, angelangt ist. Danach wird erneut die Förderrichtung umgekehrt und der Einzeltropfen 31 wieder in die in Figur 4c gezeigte zweite Position gefördert.

**Patentansprüche**

1. Vorrichtung zur Untersuchung von Reaktionen umfassend eine flüssige Phase und eine gasförmige Phase in Gegenwart eines festen Katalysators (13), umfassend einen Kanal (9), in dem der feste Katalysator (13) aufgenommen ist, einen Tropfenerzeuger (7) zur Zufuhr mindestens eines Einzeltropfens (31) in den Kanal (9) und eine Analyseeinheit (11) oder Messeinheit, **dadurch gekennzeichnet, dass** weiterhin ein Gasanschluss zur Zufuhr der Gasphase umfasst ist und der Kanal (9) am Beginn und am Ende des festen Katalysators (13) jeweils einen hydraulischen Durchmesser von 0,1 bis 5 mm aufweist und eine Pumpeneinheit umfasst ist, mit der der mindestens eine Einzeltropfen (31) oszillierend durch den festen Katalysator (13) bewegt werden kann.

2. Vorrichtung gemäß Anspruch 1, **dadurch gekennzeichnet, dass** der Kanal (9) im Bereich des festen Katalysators (13) einen konstanten Querschnitt aufweist.

3. Vorrichtung gemäß Anspruch 1 oder 2, **dadurch gekennzeichnet, dass** die Pumpeneinheit eine erste (15) und eine zweite (17) Pumpe mit umkehrbarer Förderrichtung umfasst, wobei die erste Pumpe (15) vor dem festen Katalysator (13) und die zweite Pumpe (17) hinter dem festen Katalysator (13) angeordnet ist und die Pumpen (15, 17) so miteinander wirken, dass immer eine Pumpe (15; 17) im Saugbetrieb und die andere Pumpe (15; 17) im Druckbetrieb arbeitet.

4. Vorrichtung gemäß Anspruch 1 oder 2, **dadurch gekennzeichnet, dass** die Pumpeneinheit einen Bypass (27) umfasst, der vor dem festen Katalysator (13) aus dem Kanal (9) abzweigt und hinter dem festen Katalysator (13) wieder in den Kanal (9) einmündet und in dem Bypass (27) eine Pumpe (29) mit umkehrbarer Förderrichtung aufgenommen ist.

5. Vorrichtung gemäß Anspruch 4, **dadurch gekennzeichnet, dass** die Pumpe (29) mit umkehrbarer Förderrichtung einen in einem Zylinder geführten oszillierenden Kolben umfasst.

6. Vorrichtung gemäß einem der Ansprüche 1 bis 5, **dadurch gekennzeichnet, dass** die Analyseeinheit (11) oder Messeinheit ein Ramanspektrometer, ein Infrarot-Spektrometer, ein Nah-Infrarot-Spektrometer, ein Kernspinresonanz-Spektrometer, ein UV/VIS-Spektrometer, ein Elektronenspinresonanz-Spektrometer, ein Terahertz-Spektrometer oder ein Massenspektrometer umfasst.

7. Vorrichtung gemäß einem der Ansprüche 1 bis 6, **dadurch gekennzeichnet, dass** der feste Katalysator (13) temperierbar ist.

8. Verfahren zur Untersuchung einer Drei-Phasen-Reaktion in einer Vorrichtung (1) gemäß einem der Ansprüche 1 bis 7, umfassend:

   (a) Zufuhr einer flüssigen Phase zu dem Tropfenerzeuger (7);
   (b) Fluten des Kanals (9) mit einer gasförmigen Phase;
   (c) Erzeugen mindestens eines Einzeltropfens (31) im Tropfenerzeuger (7) und Zufuhr des mindestens einen Einzeltropfens (31) in den mit der gasförmigen Phase gefluteten Kanal (9);
   (d) Bewegen des mindestens einen Einzeltropfens (31) durch den festen Katalysator (13) in einer ersten Richtung unter Verwendung der Pumpeneinheit;
   (e) Umkehr der Förderrichtung der Pumpeneinheit und Bewegen des mindestens einen Einzeltropfens (31) durch den festen Katalysator (13) in einer zweiten Richtung, die der ersten Richtung entgegengerichtet ist;
   (f) Wiederholen der Schritte (d) und (e),

   wobei der mindestens eine Einzeltropfen (31) bei der Bewegung in die erste Richtung und/oder bei der Bewegung in die zweite Richtung bis zu einer Messstelle gefördert wird, an der die Messeinheit oder Analyseeinheit (11) positioniert ist, um Daten zu erfassen.

9. Verfahren gemäß Anspruch 8, **dadurch gekennzeichnet, dass** die Daten, die an der Messstelle erfasst werden, ausgewählt sind aus Druck, Temperatur und Daten, die Aufschluss auf die chemische Zusammensetzung des Einzeltropfens geben.

10. Verfahren gemäß Anspruch 8 oder 9, **dadurch gekennzeichnet, dass** der Einzeltropfen (31) ein Volumen im Bereich von 4 bis 50 mm$^3$ aufweist.

11. Verfahren gemäß einem der Ansprüche 8 bis 10, **dadurch gekennzeichnet, dass** der Einzeltropfen (31) ein Verhältnis von Tropfenlänge parallel zur Achse des Kanals zu Tropfendurchmesser senkrecht zur Achse des Kanals im Bereich von 1 bis 20 aufweist.

12. Verfahren gemäß einem der Ansprüche 8 bis 11, **dadurch gekennzeichnet, dass** das Verhältnis des Gasvolumens im Kanal (9) zum Tropfenvolumen im Bereich von 10 bis 1000000 liegt.

Fig. 1

Fig. 2

Fig. 3

Fig. 4a

Fig. 4b

Fig. 4c

Europäisches
Patentamt

European
Patent Office

Office européen
des brevets

# EUROPÄISCHER RECHERCHENBERICHT

**Nummer der Anmeldung**

EP 20 15 5472

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | MILAD ABOLHASANI ET AL: "Oscillatory multiphase flow strategy for chemistry and biology", LAB ON A CHIP, Bd. 16, Nr. 15, 1. Januar 2016 (2016-01-01), Seiten 2775-2784, XP055708010, ISSN: 1473-0197, DOI: 10.1039/C6LC00728G * Zusammenfassung; Abbildungen 2,5 * ----- | 1-12 | INV. B01J19/00 ADD. G01N31/10 B01L3/00 |
| A | CONNOR W. COLEY ET AL: "Material-Efficient Microfluidic Platform for Exploratory Studies of Visible-Light Photoredox Catalysis", ANGEWANDTE CHEMIE, INTERNATIONAL EDITION, Bd. 56, Nr. 33, 7. August 2017 (2017-08-07), Seiten 9847-9850, XP055708031, DE ISSN: 1433-7851, DOI: 10.1002/anie.201705148 * Zusammenfassung; Abbildung 1c * ----- | 1-12 | |
| A | US 2006/165570 A1 (KNOPF FREDERICK C [US] ET AL) 27. Juli 2006 (2006-07-27) * Absätze [0010], [0011], [0031]; Ansprüche; Abbildungen 1,4,5,7 * ----- | 1-12 | **RECHERCHIERTE SACHGEBIETE (IPC)** B01J G01N B01L |
| A | US 2017/121271 A1 (KHAN SAIF A [SG] ET AL) 4. Mai 2017 (2017-05-04) * Ansprüche; Abbildung 1 * ----- -/-- | 1-12 | |

Der vorliegende Recherchenbericht wurde für alle Patentansprüche erstellt

| Recherchenort | Abschlußdatum der Recherche | Prüfer |
|---|---|---|
| Den Haag | 25. Juni 2020 | Veefkind, Victor |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

**EUROPÄISCHER RECHERCHENBERICHT**

Nummer der Anmeldung

EP 20 15 5472

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A,D | TORSTEN KLEMENT ET AL: "Reactor Concept for Contactless Kinetic Measurement in Oscillating Droplets via Raman Spectroscopy", CHEMIE INGENIEUR TECHNIK., Bd. 91, Nr. 5, 18. Mai 2019 (2019-05-18), Seiten 651-656, XP055707791, WEINHEIM; DE ISSN: 0009-286X, DOI: 10.1002/cite.201800199 * das ganze Dokument * ----- | 1-12 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 25. Juni 2020 | Veefkind, Victor |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 20 15 5472

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-06-2020

| Im Recherchenbericht angeführtes Patentdokument | Datum der Veröffentlichung | Mitglied(er) der Patentfamilie | Datum der Veröffentlichung |
|---|---|---|---|
| US 2006165570 A1 | 27-07-2006 | KEINE | |
| US 2017121271 A1 | 04-05-2017 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KLEMENT, T. et al.** Reactor Concept for Contactless Kinetic Measurement in Oscillating Droplets via Raman Spectroscopy. *Chemie Ingenieur Technik,* 2019, vol. 91 (5), 651-656

- Handbook of Heterogeneous Catalysis. VCH Wiley